(19) Europäisches Patentamt
European Patent Office
Office européen des brevets

(11) **EP 3 965 028 A1**

(12) **EUROPEAN PATENT APPLICATION**

(43) Date of publication:
**09.03.2022 Bulletin 2022/10**

(21) Application number: **21160379.0**

(22) Date of filing: **03.03.2021**

(51) International Patent Classification (IPC):
**G06Q 10/04** (2012.01)  **G06Q 10/06** (2012.01)
**G06Q 10/10** (2012.01)

(52) Cooperative Patent Classification (CPC):
**G06Q 10/047; G06Q 10/063112; G06Q 10/103**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.09.2020 JP 2020150715**

(71) Applicants:
• **Kabushiki Kaisha Toshiba**
**Minato-ku**
**Tokyo (JP)**

• **Toshiba Infrastructure Systems & Solutions Corporation**
**Kawasaki-shi, Kanagawa 212-8585 (JP)**

(72) Inventors:
• **AISU, Hideyuki**
**Tokyo (JP)**
• **YAMAGUCHI, Daisuke**
**Tokyo (JP)**
• **IKEDA, Katsumi**
**Kanagawa (JP)**

(74) Representative: **Moreland, David**
**Marks & Clerk LLP**
**Aurora**
**120 Bothwell Street**
**Glasgow G2 7JS (GB)**

(54) **INFORMATION PROCESSING APPARATUS, INFORMATION PROCESSING METHOD AND COMPUTER PROGRAM**

(57) According to one approach, an information processing apparatus includes: a plan generator to generate a first candidate plan for work performed by a plurality of workers based on constraint information including a first constraint condition for the work; and an updater to acquire a second constraint condition for the work based on the first candidate plan and update the constraint information based on the second constraint condition.

FIG. 1

**Description**

FIELD

Approaches of the present invention relate to information processing apparatuses, information processing methods and computer programs.

BACKGROUND

Planning for assigning work to each worker to satisfy a wide variety of constraint conditions on site is called work planning or shift scheduling. With a background of increase of non-regular employees, there is increasing need to automate work planning (shift scheduling) intended for human resources in various fields such as transportation, manufacturing, medical care, nursing care, stores and education. For example, an example in a field of transportation such as railroads and public transportation is crew planning. Crew planning means incorporating an anonymous basic plan, so-called an alternation plan, into specific work planning (shift scheduling) to satisfy the individual conditions (such as annual leave and qualifications) of each crew member.

In work planning intended for human resources, there are numerous constraint conditions that are "desired to be satisfied as much as possible", which corresponds to on-site know-how (hereinafter referred to as soft constraint conditions). For soft constraint conditions, it frequently happens that soft constraint conditions conflicting with each other are required to be satisfied at the same time, or there is no solution that satisfies all soft constraint conditions.

As a typical example of a general solution for scheduling when such soft constraint conditions are set, a method described in Non Patent Literature 1 is known. First, for each soft constraint condition, a calculation formula of a penalty according to degree of violation of the constraint condition and a weight according to importance of each constraint condition are defined. Then, a planning problem is represented in the form of a weighted constraint satisfaction problem of minimizing the weighted sum of penalties. This planning problem is solved as a combinatorial optimization problem.

With these methods, it is very difficult to tune priority of each constraint condition and the weight of each constraint condition as well-balanced values in advance. In addition, even in the same company, each workplace has specific constraint conditions, so that it has been difficult to extract all of the conditions and reflect them as constraint conditions. Moreover, as work rules are often changed (that is, constraint conditions are often changed) irregularly after the start of operation, it is also difficult to maintain parameter setting data of a plan module which generates plans. Hence, the priority and weight have been required to be tuned manually so far.

One of techniques for solving such problems is a classical approach in the field of artificial intelligence, a so-called case-based approach. With this approach, past case data similar to input data are discovered and the discovered case data are utilized for selecting constraint conditions to be used in the subject or for generating plans. Another technique is a scheme where past planning cases serving as a teacher are accumulated and constraint conditions and weights of the constraint conditions are learned so that a feature amount of an automatically proposed plan approximates a feature amount of the teacher data. However, in the case-based method described above and the method of learning constraint conditions and weights from past planning cases, a large amount of case data for correct plans created by experts need be prepared, which has been a high barrier to practical use.

BRIEF DESCRIPTION OF THE DRAWINGS

FIG. 1 is a block diagram showing a plan system according to an approach of the present invention;
FIG. 2 shows an example of work planning for crew members;
FIG. 3 shows an example of definition data of attribute information about work;
FIGS. 4A and 4B each show an example of a candidate plan and points violating constraint conditions;
FIG. 5 shows an update example of a first constraint condition list;
FIGS. 6A and 6B each show an example of a candidate plan and points violating constraint conditions;
FIG. 7 shows an update example of a first constraint condition list;
FIGS. 8A and 8B each show an example of a candidate plan and points violating constraint conditions;
FIG. 9 shows an update example of a first constraint condition list;
FIGS. 10A and 10B each show an example of a candidate plan and points violating constraint conditions;
FIG. 11 shows an update example of a first constraint condition list;
FIG. 12 is a flowchart showing an example of processing by a plan system according to this approach; and
FIG. 13 shows a hardware configuration of a plan generation apparatus or a plan management apparatus in FIG. 1.

DETAILED DESCRIPTION

According to one approach, an information processing apparatus includes: a plan generator to generate a first candidate plan for work performed by a plurality of workers based on constraint information including a first constraint condition for the work; and an updater to acquire a second constraint condition for the work based on the first candidate plan and update the constraint information based on the second constraint condition.

Approaches of the present invention are described below with reference to the drawings.

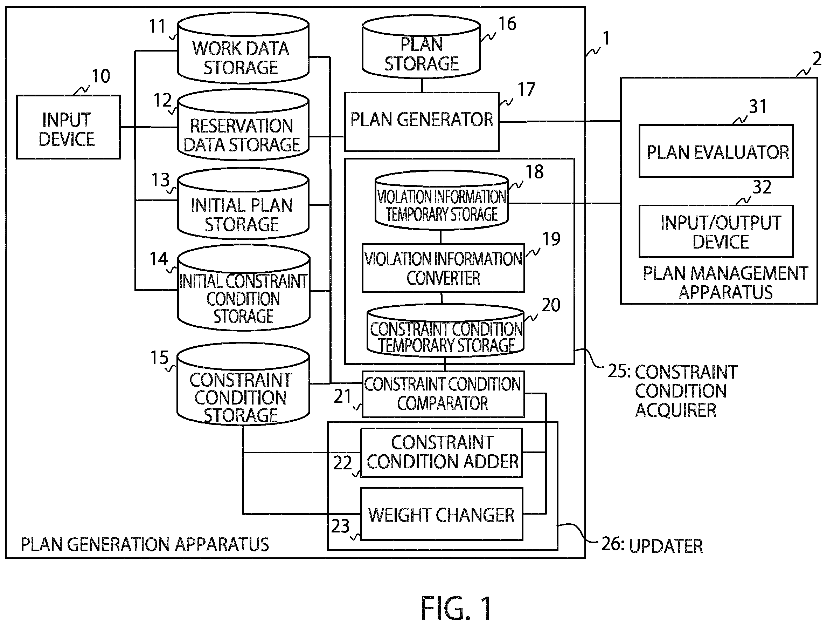

FIG. 1 is a block diagram showing a plan system according to an approach of the present invention. A plan apparatus in FIG. 1 includes a plan generation apparatus 1, which is one form of an information processing apparatus according to this approach, and a plan management apparatus 2.

An outline of the plan system in FIG. 1 is described. The plan generation apparatus 1 generates a candidate plan for work to be performed by workers, based on constraint information including at least one constraint condition (a first constraint condition) about work to be assigned to workers. The generated candidate plan is provided to the plan management apparatus 2. The plan management apparatus 2 determines whether there is a constraint violation in the candidate plan, and when there is a constraint violation, feeds back constraint violation information including contents of the constraint violation to the plan generation apparatus 1. The plan generation apparatus 1 converts the constraint violation information fed back from the plan management apparatus 2 into a constraint condition which can be interpreted by the plan system, and updates the above-described constraint information based on the converted constraint condition (learns the constraint condition). The plan generation apparatus 1 generates a final work plan by repeating generating a candidate plan and updating constraint information (learning constraint conditions). This makes it possible to realize a general-purpose system which easily generates a plan satisfying constraints on site as much as possible even if the constraints on site are changed, added, deleted and so on, or the constraints on site are of wide variety. The plan system in FIG. 1 is described in detail below.

The plan management apparatus 2 includes an input device 10, a work data storage 11, a reservation data storage 12, an initial plan storage 13, an initial constraint condition storage 14, a constraint condition storage 15, a plan storage 16, a plan generator 17, a constraint condition acquirer 25, a constraint condition comparator 21 and an updater 26. The constraint condition acquirer 25 includes violation information temporary storage 18, a violation information converter 19 and a constraint condition temporary storage 20. The updater 26 includes a constraint condition adder 22 and a weight changer 23.

The plan generator 17 generates a candidate plan by assigning work for one day or a plurality of days (time slots) to at least one worker (staff) based on data stored in the work data storage 11, the reservation data storage 12, the initial plan storage 13, the initial constraint condition storage 14 and the constraint condition storage 15. An example of a plan to be generated is the aforementioned work planning for railroad crew members.

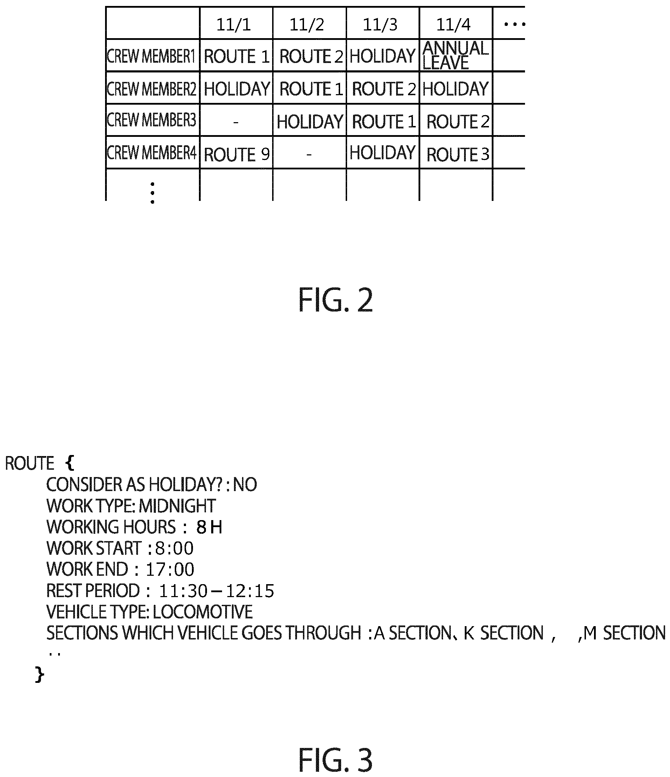

FIG. 2 shows an example of work planning for crew members. As work planning, work is assigned to each crew member on each day (time slot). Here, "route" indicates one shift of transport-related work on a relevant day and represents work to be assigned to a worker. "Annual leave" indicates paid leave and "holiday" indicates regular holidays. The type of holiday may include other types such as "public holiday" and "special holiday".

Definition data of each work stored in the work data storage 11 includes attribute information including ID information which can uniquely identify the work. FIG. 3 shows a specific example of definition data of a route. Items indicating values of a plurality of attributes such as "consider as a holiday?", "work type", "working hours", "work start time", "work end time", "rest period", "vehicle type of a train to board" and "sections which the train goes through" are included. "Consider as a holiday? : NO" represents that it is not a holiday for the crew. The set of attributes shown in the figure is an example, and other attribute information may be included and some of the attribute information shown in FIG. 3 may be omitted. Routes having the same number (ID) among a plurality of routes shown in FIG. 2 have the same values of respective items in FIG. 3.

Plans to be generated in this approach are not particularly limited to work planning for crew members and may include any plans generated by so-called shift scheduling where a set of work which must be done on each day (each time slot) is given and work is assigned to each worker. For example, in fields of manufacturing planning and construction work, plans may be included where workers are assigned to work to be done in each time slot. In addition, in fields of medical care and nursing care, plans may be included where work to be handled in each time slot (checks, treatment to patients, and the like) has been determined in advance and each work is assigned to each worker depending on their qualifications and work schedules. Moreover, plans may be included where there are a plurality of types of work at a store and workers are assigned to each work. Furthermore, in the field of education, plans may be included where available teachers are assigned to respective time slots (timetables). The type of attribute information varies depending on the type of work for which a plan is to be generated.

The input device 10 is an input device through which data to be stored in at least one of the storages 11 to 14 is input. The input device 10 may be, as an example, a device operated by a user of this system, such as a mouse, a keyboard or a touch panel. Alternatively, the input device 10 may be a device with which the user inputs information by voice, gesture, or the like. Alternatively, the input device 10 may be a communication device configured to receive data from external devices (such as servers, terminals or storage) via a wired or wireless communication network not shown in the figure and input the received data to at least one of the storages 11 to 14.

The work data storage 11 stores work data including work to be done on each day (in each time slot). The work data storage 11 is composed of, as an example, a database (DB), a list, or the like. The work data storage 11 stores sets of a plurality of works which must be handled for each day (each time slot) during a period for which a plan is to be generated. In addition, the work data storage 11 stores definition data of each work. For each time slot during the period for which a plan is to be generated, one different worker (crew member in the case of railroads) need be assigned to every work which must be handled.

The reservation data storage 12 stores reservation data including work and holidays assigned to each worker in advance. The reservation data storage 12 is composed of, as an example, a database (DB), a list, or the like. In generating a plan, it is necessary to follow assignment shown in the reservation data. It is also possible to generate a plan without using the reservation data. In this case, the reservation data storage 12 is not necessary.

The initial plan storage 13 stores an initial plan where for each time slot during a period for which the plan is to be generated, each different worker is assigned to every work which must be handled. The initial plan storage 13 is composed of, as an example, a database (DB), a list, or the like. The initial plan may be a plan generated manually by a user, a plan where work is randomly assigned to each worker, or an otherwise generated plan. It is also possible to generate a plan on a zero basis without using the initial plan.

The initial constraint condition storage 14 stores predetermined constraint conditions (initial constraint conditions) related to work to be assigned to workers (such as crew members). The initial constraint condition storage 14 is composed of, as an example, a database (DB), a list, or the like. A weight is set for each constraint condition. A simple example of a constraint condition is a constraint condition that prohibits crew members from being assigned routes on vacation days such as "annual leave" and "holiday". There are various types of constraint conditions. Details of constraint conditions are described later.

The constraint condition storage 15 stores constraint conditions learned by this system. The constraint condition storage 15 is composed of, as an example, a database (DB), a list, or the like. In an initial state, the constraint condition storage 15 may not store any constraint condition yet. A weight is set for a constraint condition. A list containing constraint conditions stored in the constraint condition storage 15 is called a first constraint condition list.

The set of constraint conditions stored in the constraint condition storage 15 corresponds to the first constraint condition. Constraint information may be defined to include also initial constraint conditions stored in the initial constraint condition storage 14.

The plan generator 17 generates a candidate plan where work (such as routes) to be handled on each day (in each time slot) is assigned to a plurality of workers, based on data stored in the work data storage 11, the reservation data storage 12 and the initial plan storage 13, and constraint conditions stored in the initial constraint condition storage 14 and the constraint condition storage 15. The plan generator 17 stores the generated candidate plan in the plan storage 16. In addition, the plan generator 17 provides the plan management apparatus 2 with a check request for checking whether or not the generated candidate plan has any constraint violation.

An algorithm with which the plan generator 17 generates a plan utilizes a known method capable of handling the aforementioned soft constraint conditions. An example of a definition as an optimization problem is described below. Depending on the type of each constraint condition stored in the storages 14 and 15, a penalty according to degree of violation of the constraint condition and a weight according to importance of the constraint condition are defined. A problem is defined as a weighted constraint satisfaction problem of minimizing the weighted sum of penalties and this problem is solved as a combinatorial optimization problem. Solutions of the combinatorial optimization problem include a constructive method, an iterative improvement method or the like. The constructive method is a method that sequentially allocates work (a route) which satisfies a constraint. The iterative improvement method is a method that iterates sequentially fine-tuning a plan and evaluating it internally (a steepest descent method, tabu search, a genetic algorithm, a simulated annealing and the like). There are various other solutions and a solution to be used is not limited to any particular one here.

A specific example of a solution in this approach is shown. Symbols are defined as follows.

$C_k$: constraint condition
$p_k(x)$: a penalty according to degree of violation of a k-th constraint condition (which is 0 when the constraint condition is satisfied)
$W_k$: a weight according to importance of the constraint condition ($\geq 0$)
$x$: a variable, $x=(x_{1,m1,j1},\cdots, x_{d,m,j},\cdots, x_{D,M,J})(\forall d \in D, \ \forall j \in J(d)), x_{d,m,j} \in \{0,1\}$
$D$: a set of days (time slots)
$M$: a set of workers
$J$: a set of work (such as routes) to be assigned

J(d): a set (⊆J) of work to be assigned on a day (time slot) "d∈D". Work "j(d)" to be assigned is different for each "d".
p(x): the weighted sum of penalties, P(x)=∑w_kp_k(x)

The variable "$x_{d,m,j}$" takes a value of 0 or 1. When work "j∈J(d)" on a day (time slot) "d∈D" is assigned to a worker "m∈M", the variable "$X_{d,m,j}$"=1 and otherwise the variable "$x_{d,m,j}$"=0.
"P(x)" is set as an objective function and a problem of minimizing the objective function is defined as follows.
[Formula 1]

$$Minimize \quad P(x) = \sum_k W_k p_k(x) \qquad (1)$$

Basic constraint conditions for solving the problem of minimizing the objective function "P(x)" are shown below.
[Formula 2]

$$\sum_{m \in M} x_{dmj} = 1 \quad \left( \forall d \in D, \forall j \in J(d) \right) \qquad (2)$$

[Formula 3]

$$\sum_{j \in J(d)} x_{dmj} \leq 1 \quad \left( \forall d \in D, \forall m \in M \right) \qquad (3)$$

[Formula 4]

$$x_{dmj} = 1 (\forall (d, m, j) \in C_1) \qquad (4)$$
$$x_{dmj} = 0 (\forall (d, m, j) \in C_2)$$

Formula (2) is a constraint that work to be assigned on each day (each time slot) must be assigned to any one of workers.
Formula (3) is a constraint that every worker is assigned one work or nothing per one day (time slot) (there may be a day (time slot) when no work is assigned to the worker).
Formula (4) defines a set "C1⊆D×M×J" representing work which must be assigned to a certain worker on a certain day (time slot) and a set "C2⊆D×M×J" representing work which must not be assigned to a certain worker on a certain day (time slot), and the sets "C1" and "C2" are set as constraints. Only either one of the sets "C1" and "C2" may be defined.
The variable "$x_{d,m,j}$" is determined by minimizing or quasi-minimizing the objective function "P(x)" under basic constraint conditions of Formulas (1) to (4). Using this process, work for each day (each time slot) is assigned to a plurality of workers. In solving the objective function, an efficient search is possible by starting with an initial plan and performing processing to adjust the initial plan. However, it is also possible to create a plan on a zero basis without the initial plan. In that case, the initial plan storage 13 is not necessary. If a search has a time limit, it is possible to increase the possibility of minimizing or quasi-minimizing within the time limit by starting with the initial plan.
The initial constraint conditions and the constraint conditions (learned constraint conditions) included in the first constraint condition list are reflected in the objective function "P(x)". Every time a constraint condition is added to the first constraint condition list, optimization is performed so that the objective function "P(x)" reflecting the added constraint condition is minimized or quasi-minimized. Details of a penalty (also called a penalty function) "$p_k(x)$" included in the objective function are described later.
The plan management apparatus 2 includes a plan evaluator 31 and an input/output device 32. The input/output device 32 includes an input device (operation device) operated by a user of this system and an output device which presents information to the user of this system. Examples of the input device are the same as examples of the input device 10 of the plan generation apparatus 1. The output device is, as an example, a display device such as a liquid crystal display device, an organic EL display device, a plasma display device or a CRT display device. Alternatively, the output device may be a VR (Virtual Reality) head mount, AR (Augmented Reality) glasses or the like.

The plan evaluator 31 checks whether or not there is a constraint violation in a candidate plan provided from the plan generator 17 (a constraint violation check).

A first method of the constraint violation check is a method that checks whether or not various constraints given in advance are satisfied by executing a computer program. That is, the plan evaluator 31 has a function of checking whether or not the constraints are satisfied. In this case, the plan evaluator 31 may execute a program for determining whether each constraint rule is satisfied, based on a plurality of rules (constraint rules) including contents of constraints. The constraint rules may be set in storage by a user using the input/output device 32 and the set constraint rules may be read out. The plan evaluator 31 identifies a constraint which the candidate plan violates (does not satisfy) as constraint violation information and provides (feeds back) it to the plan generation apparatus 1.

As a second method of the constraint violation check, a user may check a candidate plan on a display device or the like, detect whether there is a point not satisfying a constraint and input the constraint which the detected point does not satisfy as constraint violation information using the input/output device 32. In this case, the plan evaluator 31 provides (feeds back) the constraint violation information input by the user to the plan generation apparatus 1.

In this approach, either the first method or the second method may be used. Alternatively, both the first method and the second method may be used.

The plan evaluator 31 including some or all of following five types of constraints to be checked in the constraint violation check provides (feeds back) information about the type of a violated constraint and a violating point (a violating date (time frame)) to the plan generation apparatus 1 as constraint violation information.

(A) a constraint prohibiting a specific sequential order of work assigned to the same worker
(B) a constraint prohibiting combination of a qualification/experience of a worker and a specific attribute of work
(C) a constraint specifying at least one of upper and lower limits of the sum within a period of specific attribute values of work assigned to the same worker
(D) a constraint prohibiting a specific sequential order of attributes of work assigned to the same worker
(E) a constraint prohibiting combination of a qualification/experience of a worker and work

The constraint of the type A is a constraint on a sequential order itself of a plurality of work (also including holidays etc.) assigned to the same worker. The plan evaluator 31 or a user checks any violating point in a sequential order of work in a candidate plan by determination logic which considers various connection conditions between a plurality of work such as "At least a certain amount of rest time at home needs to be taken", restriction on combination of work start time and work end time before and after a holiday, and "Long-time work must not be performed in succession". The aforementioned connection condition itself between a plurality of work is not fed back to the plan generation apparatus 1.

The constraints of types B and E are described for an example of a crew plan. For example, crew members may have restrictions on types of vehicles they may operate depending on their qualifications. In addition, there is a case where a crew member must have a qualification necessary for work such as ticket checks performed on board and a case where a crew member must have operating experience on a line included in a route. When an attribute value which causes violation in restricted work can be acquired as a part of constraint violation information, it is treated as a constraint of the type B, and otherwise it is treated as a constraint of the type E.

Specific examples of a constraint of the type C include a constraint that total labor hours within a certain period must not exceed a predetermined upper limit for example, a constraint that total labor hours within a certain period must not be lower than a predetermined lower limit for example, and a constraint that a worker must take a legally required number of days off within a predetermined period. The upper and lower limit values correspond to boundary values which define constraints. In the case of a constraint of the type C, the plan evaluator 31 also provides (feeds back) to the plan generation apparatus 1 information for identifying whether the constraint limits the upper limit or the lower limit as information on the type of the violated constraint.

Specific examples of a constraint of the type D include a constraint that the work type "midnight" must not be continuous a certain number of times and a constraint that "midnight" and "early morning" must not be continuous.

The constraint condition acquirer 25 acquires from the plan evaluator 31 of the plan management apparatus 2 violation information for a constraint which the candidate plan was determined not to satisfy. The violation information temporary storage 18 stores the acquired constraint violation information. The violation information converter 19 reads the constraint violation information stored in the violation information temporary storage 18, converts it into a format which can be interpreted by this plan system, and stores the converted information in the constraint condition temporary storage 20 as a constraint condition. The constraint violation information stored in the violation information converter 19 may be deleted or may be overwritten at the next writing to the violation information temporary storage 18. A list containing a set of constraint conditions stored in the constraint condition temporary storage 20 is called a second constraint condition list.

The constraint condition comparator 21 reads the second constraint condition list from the constraint condition temporary storage 20. After reading the second constraint condition list, the constraint condition comparator 21 may delete the second constraint condition list stored in the constraint condition temporary storage 20. Alternatively, the second constraint condition list may be overwritten at the next writing to the constraint condition temporary storage 20.

The constraint condition comparator 21 compares the constraint conditions in the second constraint condition list with each constraint condition included in the first constraint condition list in the constraint condition storage 15. When the same constraint condition as the constraint condition in the second constraint condition list is not included in the first constraint condition list, the constraint condition adder 22 adds the constraint condition to the first constraint condition list as a new constraint condition. The constraint condition adder 22 sets an initial weight for the constraint condition and adds the set weight to the first constraint condition list in association with the constraint condition. The weight may be a predetermined value, or the plan management apparatus 2 may feed back the weight with the constraint violation information and the fed back weight may be used. The weight may be determined in other ways. The weight is a type of learning parameter and may be tuned in advance through actual cases.

On the other hand, when the same constraint condition as the constraint condition in the second constraint condition list is included in the first constraint condition list, the weight changer 23 changes the weight of the constraint condition included in the first constraint condition list. For example, the weight is changed by adding a certain value to it or multiplying it by a certain value. The value of the weight may be changed depending on the number of times the weight is updated. For example, as the number of times of changes increases, the value to be added may be decreased or increased. The weight may be changed in other ways. When the type of the constraint is C, the constraint concerns the same attribute value and the sum of the attribute values within the period of the same length as the constraint condition in the second constraint condition list, and only the boundary value (upper or lower limit) is different, the boundary value of the constraint condition included in the first constraint condition list is updated with the boundary value included in the constraint condition in the second constraint condition list and the weight of the constraint condition is updated. Only the boundary value may be updated.

Some specific examples of updating constraint conditions in the first constraint condition list based on constraint violation information fed back from the plan management apparatus 2 are described below.

[First Example]

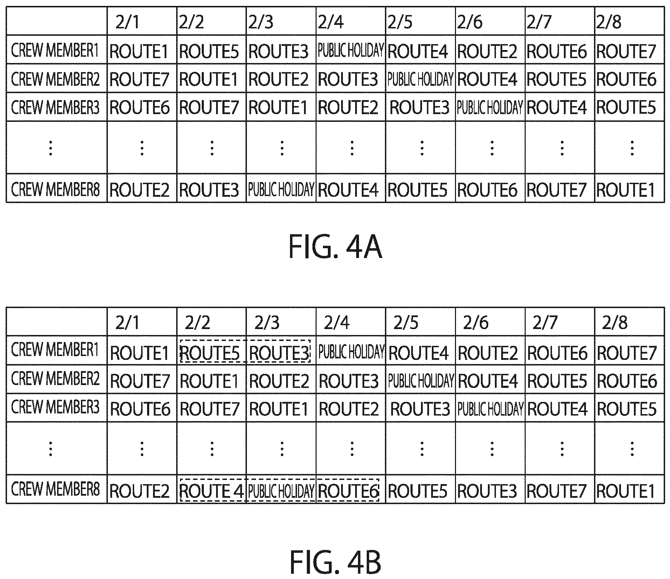

FIG. 4A shows an example of a candidate plan provided from the plan generation apparatus 1 to the plan management apparatus 2. FIG. 4B shows points detected by the plan evaluator 31 as violating constraints of the aforementioned type A in the candidate plan in FIG. 4A. The detected points are enclosed by dashed frames.

The plan evaluator 31 determines whether there is a point (case) violating a constraint in the candidate plan in FIG. 4A. In this example, two cases of "route 5 → route 3" and " route 4 → public holiday → route 6" shown in FIG. 4B are detected as violating constraints.

The constraint condition acquirer 25 of the plan generation apparatus 1 acquires constraint violation information about the violations of the two constraints from the plan management apparatus 2. The constraint condition acquirer 25 converts the constraint violation information into a format which can be interpreted by the plan generation apparatus 1, and provides the constraint condition comparator 21 with a second constraint condition list including the two constraint conditions.

The constraint condition comparator 21 compares each constraint condition included in the second constraint condition list with the constraint condition included in the first constraint condition list, and determines whether or not they are the same. When the constraint condition included in the second constraint condition list is different from the constraint condition included in the first constraint condition list, the constraint condition is added to the first constraint condition list. An initial weight is set for the constraint condition to be added. When the constraint condition included in the second constraint condition list is the same as the constraint condition included in the first constraint condition list, the weight of the constraint condition in the first constraint condition list is changed.

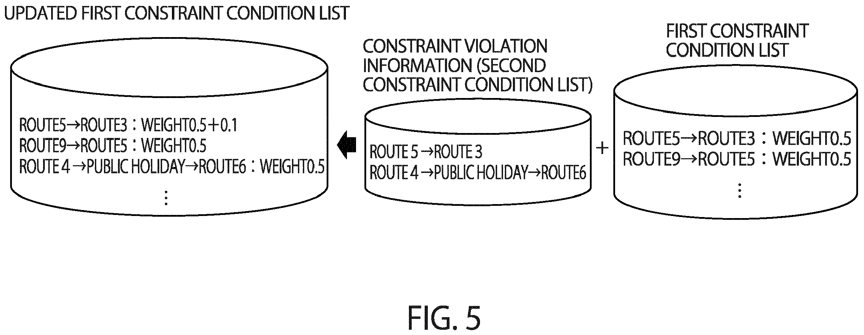

FIG. 5 shows an update example of a first constraint condition list. As shown on the right of the figure, in the first constraint condition list before update, a constraint condition prohibiting "route 5 → route 3" and a constraint condition prohibiting "route 9 → route 5" are stored. Weights for both the constraint conditions are 0.5. Other constraint conditions are also stored, but are not shown in the figure.

As shown in the center of the figure, a constraint prohibiting "route 5 → route 3" and a constraint prohibiting "route 4 → public holiday → route 6" are shown as constraint violation information fed back from the plan management apparatus 2.

The fed back "route 5 → route 3" is the same as "route 5 → route 3" included in the first constraint condition list. Hence, as shown on the left of the figure, 0.1 is added to the weight of "route 5 → route 3" in the first constraint condition list to obtain 0.6.

The fed back "route 4 → public holiday → route 6" is not included in the first constraint condition list. Hence, as shown on the left of the figure, "route 4 → public holiday → route 6" is added to the first constraint condition list in association with an initial weight of 0.5, as a new constraint condition.

[Second Example]

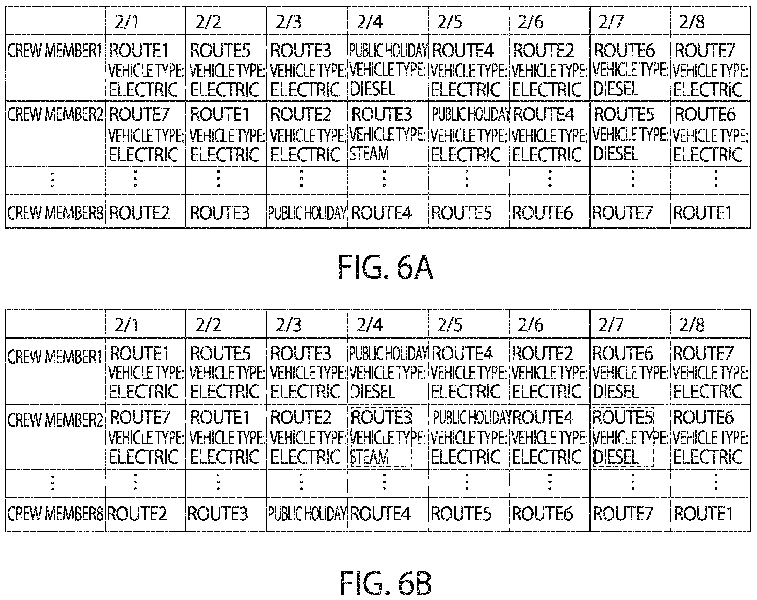

FIG. 6A shows an example of a candidate plan provided from the plan generation apparatus 1 to the plan management apparatus 2. FIG. 6B shows points detected by the plan evaluator 31 as violating constraints of the aforementioned type B in the candidate plan in FIG. 6A. The detected points are enclosed by dashed frames. In FIG. 6, "vehicle type" is assumed to be one of attributes of work (route). When the attribute which causes violation (the vehicle type in this example) is unknown, or when values of the attribute cannot be acquired, it is detected as a constraint of the type E by the plan evaluator 31.

In this example, a day when a crew member 2 is assigned a route 3 to be operated by a steam and a day when the crew member 2 is assigned a route 5 to be operated by a diesel locomotive (diesel) are detected as constraint violating points.

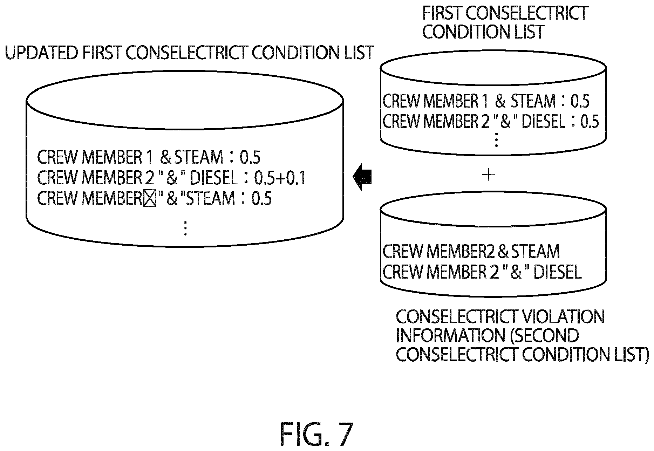

FIG. 7 shows an update example of a first constraint condition list. As shown at the upper right of the figure, in the first constraint condition list before update, a constraint condition prohibiting "crew 1 & electric (a crew 1 from working on a steam)" and a constraint condition prohibiting "crew 2 & diesel (a crew 2 from working on a diesel locomotive (diesel))" are stored. Weights for both the constraint conditions are 0.5. Other constraint conditions are also stored, but are not shown in the figure.

As shown in the center of the figure, a constraint prohibiting "crew 2 & steam" and a constraint prohibiting "crew 2 & diesel" are shown as constraint violation information fed back from the plan management apparatus 2.

The fed back "crew 2 & diesel" is the same as "crew 2 & diesel" included in the first constraint condition list. Hence, as shown on the left of the figure, 0.1 is added to the weight of "crew 2 & diesel" in the first constraint condition list to obtain 0.6.

The fed back "crew 2 & steam" is not included in the first constraint condition list. Hence, as shown on the left of the figure, "crew 2 & steam" is added to the first constraint condition list as a new constraint condition. An initial weight of 0.5 is set for "crew 2 & steam".

[Third Example]

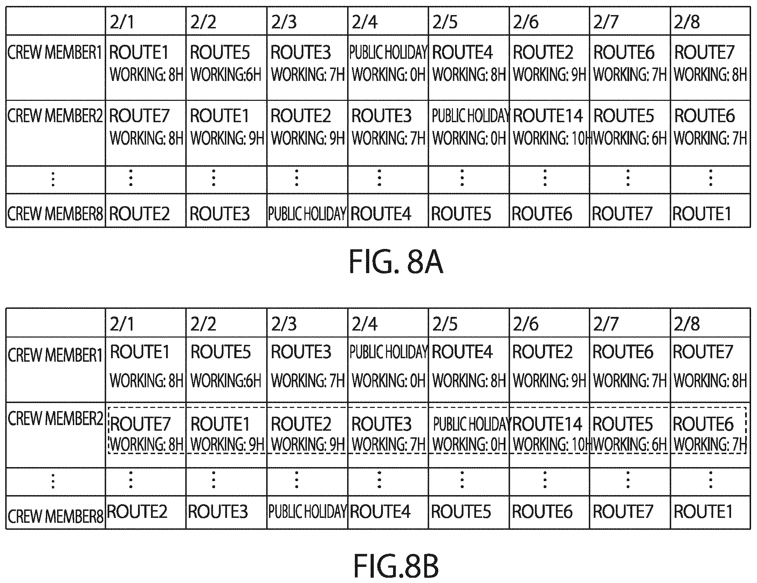

FIG. 8A shows an example of a candidate plan provided from the plan generation apparatus 1 to the plan management apparatus 2. FIG. 8B shows points detected by the plan evaluator 31 as violating constraints of the aforementioned type C in the candidate plan in FIG. 8A. The detected points are enclosed by a dashed frame. In FIG. 8, "working (working hours)" is assumed to be one of attributes of work (route).

The plan evaluator 31 detects points indicated by a dashed frame in FIG. 8B as not satisfying constraints.

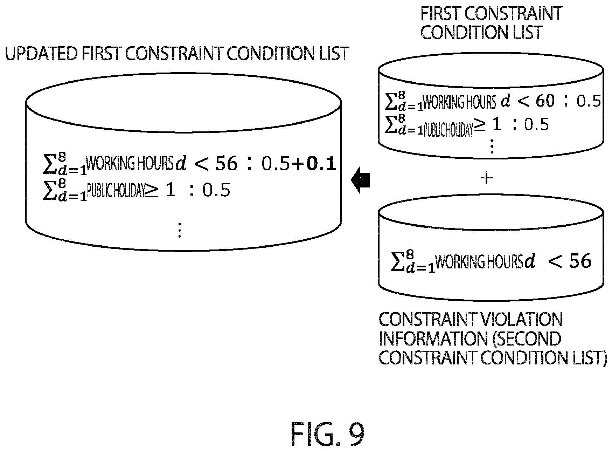

FIG. 9 shows an update example of a first constraint condition list. As shown on the upper right of the figure, in the first constraint condition list before update, a constraint condition requiring "$\sum_{d=1}^{8}$ working hours d<60" and a constraint condition requiring "$\sum_{d=1}^{8}$ public holiday>1" are stored. "$\sum_{d=1}^{8}$ working hours d<60" requires that the total working hours for 8 days be less than 60 hours. In other words, it is prohibited that the total working hours for 8 days are 60 hours or more. "$\sum_{d=1}^{8}$ public holiday>1" requires that the number of public holidays in eight days exceed one. In other words, it is prohibited that the number of public holidays in eight days is one or less. Other constraint conditions are also stored, but are not shown in the figure.

As shown at the lower right of the figure, "$\sum_{d=1}^{8}$ working hours d<56" is shown as constraint violation information fed back from the plan management apparatus 2. A boundary value (56 in this example) is the sum of target attribute values of the points considered to violate constraints of the type C in the candidate plan, and represents the total of 56 working hours of the crew member 2 for 8 days in Fig. 8B.

The fed back "$\sum_{d=1}^{8}$ working hours d<56" is a constraint condition limiting an upper limit of the total working hours for 8 days as with "$\sum_{d=1}^{8}$ working hours d<60" included in the first constraint condition list, and only the boundary value (60 in this example) is different. Hence, as shown on the left of the figure, the boundary value 60 of "$\sum_{d=1}^{8}$ working hours d<60" in the first constraint condition list is changed to 56. In addition, 0.1 is added to the weight to obtain 0.6. In this example, the boundary value of the constraint condition is changed, but it is also possible to add a constraint condition with a different boundary value as a new constraint condition. In this case, initial weight (for example 0.5) is set for the new constraint condition. Furthermore, there may also be a way of changing only the boundary value and not changing the weight.

[Fourth Example]

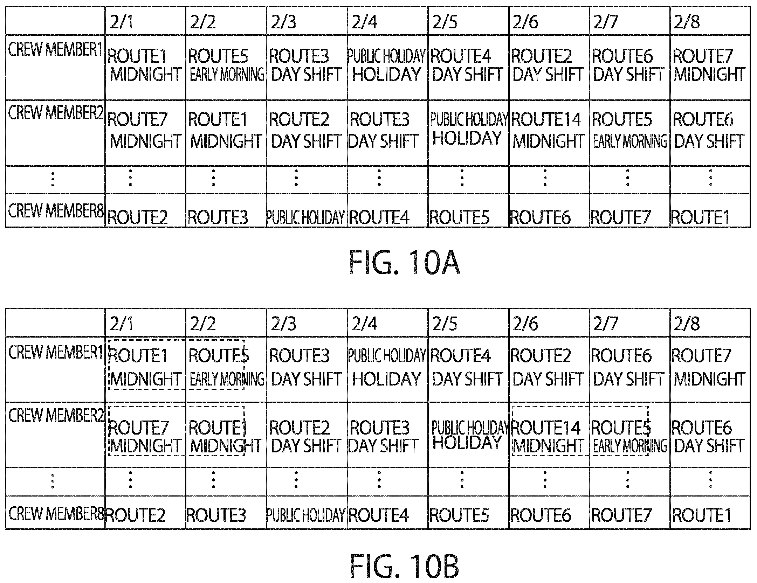

FIG. 10A shows an example of a candidate plan provided from the plan generation apparatus 1 to the plan management apparatus 2. FIG. 10B shows points detected by the plan evaluator 31 as violating constraints of the aforementioned type D in the candidate plan in FIG. 10A. The detected points are enclosed by dashed frames. In FIG. 10, work types such as "day shift", "midnight" and "early morning" are assumed to be one of attributes of work (route).

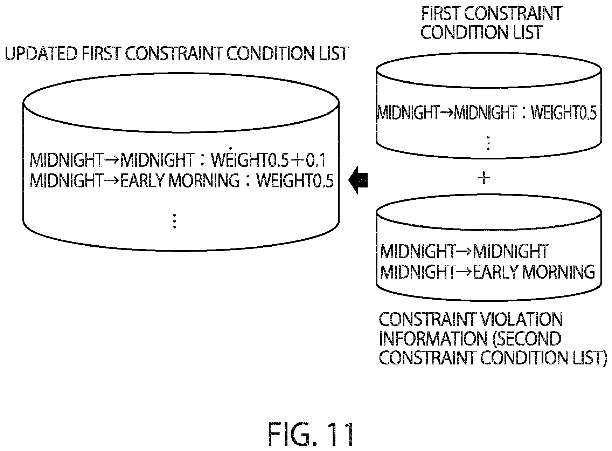

FIG. 11 shows an update example of a first constraint condition list. As shown on the upper right of the figure, in the first constraint condition list before update, a constraint condition prohibiting "midnight → midnight" is stored. A weight for it is 0.5. Other constraint conditions are also stored, but are not shown in the figure.

As shown on the lower right of the figure, a constraint condition prohibiting "midnight → midnight" and a constraint condition prohibiting "midnight → early morning" are shown as constraint conditions fed back from the plan management apparatus 2.

The fed back "midnight → midnight" is the same as "midnight → midnight" included in the first constraint condition list. Hence, as shown on the left of the figure, 0.1 is added to the weight of "midnight → midnight" in the first constraint condition list to obtain 0.6.

The fed back "midnight → early morning" is not included in the first constraint condition list. Hence, as shown on the left of the figure, "midnight → early morning" is added to the first constraint condition list as a new constraint condition. An initial weight of 0.5 is set for "midnight → early morning".

Here, an example of formulating the penalty function of aforementioned Formula (1) based on constraint conditions included in the first constraint condition list is specifically shown.

[Type A Constraint]

[Formula 5]

$$\mathsf{IF} \sum_{t=0}^{T_k} x_{(d+t)mj_k(t)} \le T_k \quad (\forall k \in K_1, \forall d \in \{\forall d \in D \mid d + T_k \in D\}, \forall m \in M)$$

$$p_k(\boldsymbol{x}) = 0$$

$$\mathsf{ELSE} \tag{5}$$

$$p_k(\boldsymbol{x}) = 1$$

The k-th constraint condition "($k \in K_1$)" prohibits any worker from being assigned "($T_k+1$)" work in a particular order "($j_k(0)$, $j_k(1)$,..., $j_k(T_k)$)". "$K_1$" is the number of constraint conditions of the same type, "k" is an ID of the constraint condition and "$T_k$" represents the number of sequences prohibited by the constraint condition "k".

[Type B Constraint]

[Formula 6]

$$\mathsf{IF} \quad a_{kj}x_{dmj} = 0 \quad \left(\forall k \in K_2, \forall d \in D, \forall m \in M_k, \forall J \in J(d)\right)$$

$$p_k(\boldsymbol{x}) = 0$$

$$\mathsf{ELSE} \tag{6}$$

$$p_k(\boldsymbol{x}) = 1$$

It is prohibited to assign work "j" with a specific attribute to workers included in a set "$M_k$". Flags "($\alpha_{1j}$, $\alpha_{2j}$,..., $\alpha_{Kj}$)" indicate whether or not the work "j" corresponds to an attribute targeted by the constraint condition "k". "$\alpha_{Kj}=1$" represents "yes" and "$\alpha_{Kj}=0$" represents "no." "$K_2$" is the number of constraint conditions of the same type and "k" is an ID of the constraint condition.

[Type C Constraint (in the case of limiting an upper limit value)]

[Formula 7]

$$\text{IF} \quad \sum_{t=0}^{T_k} \sum_{j \in J(d+t)} a_{kj} x_{(d+t)mj} \le b_k \quad (\forall k \in K_3, \forall d \in D_k, \forall m \in M)$$

$$p_k(\boldsymbol{x}) = 0$$

$$\text{ELSE}$$

$$p_k(\boldsymbol{x}) = 1 \tag{7}$$

$$p_k(\boldsymbol{x}) = \sum_{t=0}^{T_k} \sum_{j \in J(d+t)} a_{kj} x_{(d+t)mj} - b_k \tag{7'}$$

Formula (7) or Formula (7') is used. It is a constraint condition which prohibits the sum of attributes "$\alpha_{Kj}$" of "$T_k+1$" work from a start date "$d \in D_k$" assigned to a worker from exceeding a certain value "$b_k$". "$\alpha_{Kj}$" is a value of an attribute targeted by the constraint condition "k" in work "j". "$K_3$" is the number of constraint conditions of the same type and "k" is an ID of the constraint condition.

[Fourth Example]

[Type C Constraint (in the case of limiting a lower limit value)]

$$\text{IF} \quad \sum_{t=0}^{T_k} \sum_{j \in J(d+t)} a_{kj} x_{(d+t)mj} \ge b_k \quad (\forall k \in K_4, \forall d \in D_k, \forall m \in M)$$

$$p_k(\boldsymbol{x}) = 0$$

$$\text{ELSE} \quad p_k(\boldsymbol{x}) = 1 \tag{8}$$

$$p_k(\boldsymbol{x}) = b_k - \sum_{t=0}^{T_k} \sum_{j \in J(d+t)} a_{kj} x_{(d+t)mj} \tag{8'}$$

#1 Formula

Formula (8) or Formula (8') is used. It prohibits the sum of attributes "$\alpha_{Kj}$" of "$T_k+1$" work from a start date "$d \in D_k$" assigned to a worker from being lower than a certain value "$b_k$". "$\alpha_{Kj}$" is a value of an attribute targeted by the constraint condition "k" in work "j". "$K_4$" is the number of constraint conditions of the same type and "k" is an ID of the constraint condition.

[Type D Constraint]

[Formula 9]

$$\text{IF} \sum_{t=0}^{T_k} \sum_{j \in J_{(d+t)}} a_{kj}(t) x_{(d+t)mj} \leq T_k \quad (\forall k \in K_5, \forall d \in \{\forall d \in D | d + T_k \in D\}, \forall m \in M)$$

$$\text{ELSE} \quad \begin{aligned} p_k(\boldsymbol{x}) &= 0 \\ p_k(\boldsymbol{x}) &= 1 \end{aligned} \qquad \text{(9)}$$

"$T_k$+1" work must not be assigned to any worker in a specific order of attributes defined by a flag "$\alpha_{Kj(t)}$". Flags "($\alpha_{1j}(0)$, $\alpha_{1j}(1)$,..., $\alpha_{1j}(T_1)$,..., $\alpha_{Kj}(0)$, $\alpha_{Kj}(T_K)$)" indicate whether or not the work "j" corresponds to the t-th attribute in a sequence of attributes prohibited by the constraint condition "k". "$\alpha_{Kj(t)}$=1" represents "yes" and "$\alpha_{Kj(t)}$=0" represents "no." "$K_5$" is the number of constraint conditions of the same type, "k" is an ID of the constraint condition and "$T_k$" represents the number of sequences prohibited by the constraint condition "k".

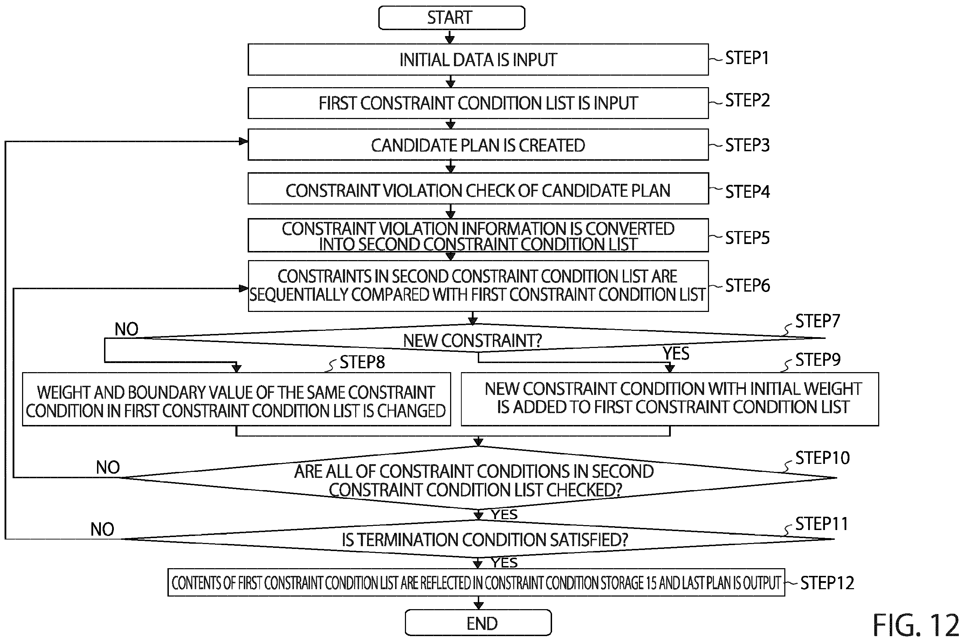

FIG. 12 is a flowchart showing an example of processing by a plan system according to this approach. The plan generator 17 reads a list of work (work data) to be assigned on each day from the work data storage 11 and reads reservation information about holidays such as annual leave and work for which assignment has already been determined from the reservation data storage 12 (STEP 1). In addition, the plan generator 17 reads an initial plan from the initial plan storage 13, and reads a preset constraint condition (an initial constraint condition) from the initial constraint condition storage 14 (STEP 1).

Subsequently the plan generator 17 reads a first constraint condition list including learned constraint conditions from the constraint condition storage 15 (STEP 2).

Then the plan generator 17 generates a candidate plan based on the initial constraint condition, the constraint conditions in the first constraint condition list, and the data read out in STEP1 (STEP 3). The plan generator 17 provides the plan management apparatus 2 with the candidate plan data and a check request for checking whether or not there is a constraint violation.

The plan management apparatus 2 checks the candidate plan for a constraint violation based on the check request (STEP 4). As an example, the plan evaluator 31 identifies the type and violating point (date or time slot) of the constraint which the candidate plan violates (does not satisfy) and feeds back the constraint violation information to the plan generation apparatus 1. Alternatively, the user uses the input/output device 32 to see the displayed candidate plan and check the violating point not satisfying the constraint. When the user checks, it is necessary not only to point out the violating point, but also to input the type of constraint which the violating point violated. In this case, the plan evaluator 31 feeds back the constraint violation information including the constraint input by the user to the plan generation apparatus 1.

The violation information converter 19 converts the constraint violation information fed back from the plan management apparatus 2 into a constraint condition in a format which can be interpreted by the plan generation apparatus 1, and generates a second constraint condition list including the constraint condition (STEP 5).

Then the constraint condition comparator 21 sequentially compares constraint conditions in the second constraint condition list with the first constraint condition list (STEP 6). The process branches depending on whether or not the constraint condition in the second constraint condition list is the same as the constraint condition included in the first constraint condition list, that is, whether or not the constraint condition has already been detected in the constraint violation check. (STEP 7).

When the constraint condition in the second constraint condition list is not the same as the constraint condition included in the first constraint condition list, that is, when it is a new constraint condition, an initial weight is set for the new constraint condition. The new constraint condition with the initial weight set is added to the first constraint condition list (STEP 9).

When the constraint condition in the second constraint condition list is the same as the constraint condition included in the first constraint condition list, the weight of the constraint condition included in the first constraint condition list is increased. This can make the constraint condition be reflected more strongly when the plan generator 17 generates a candidate plan next time (STEP 8). Moreover, when the constraint condition in the second constraint condition list is of the type C, it is a constraint concerning the sum of the same attribute values in the same period as the constraint condition included in the first constraint condition list, and only the boundary value is different between the two, the boundary value is updated, and further the weight is updated. Specifically, when a violation of exceeding an upper limit value (boundary value) of the sum occurs, the upper limit value for the constraint condition is made smaller than the current value (the constraint is made stricter). On the contrary, when a violation of being lower than a lower limit value (boundary value) of the sum occurs, the lower limit value for the constraint condition is modified to be larger than the current value (the constraint is made stricter).

Once processing in STEP 7 to STEP 9 is done for all of constraint conditions in the second constraint condition list (STEP 10), it is determined whether a termination condition is satisfied (STEP 11). If the termination condition is not satisfied, the process returns to STEP 3. In STEP 3 to which the process has returned, a new candidate plan is generated using the updated first constraint condition list, and a constraint violation check is performed (STEP 3 to STEP 10). Until the termination condition is satisfied, STEP 3 to STEP 10 are iterated.

Once the termination condition is satisfied, the last generated candidate plan is output to the plan management apparatus 2 as a final plan (STEP 12). Alternatively, a candidate plan having the smallest value of the objective function among candidate plans stored in the plan storage 16 or a candidate plan having a value of the objective function smaller than a threshold value may be output as the final plan. Further, contents of the updated first constraint condition list are reflected in the constraint condition storage 15. In STEP 8 and STEP 9, the update contents may be reflected in the constraint condition storage 15 at the same time as the first constraint condition list is updated. In addition to the processing in FIG. 12, constraint conditions stored in the constraint condition storage 15 may be changed. For example, when contents of work to be planned or workers are changed significantly (for example, in the case of timetable revision in a railroad crew plan), most of learned constraint conditions become invalid, so that contents of the constraint condition storage 15 are initialized. Initialization processing may include a method of deleting all added constraint conditions and restoring weights to default settings, a method of deleting only some constraint conditions with specified IDs, a method of deleting only specified types of constraint conditions and the like, and an initialization method to be used is not limited to any particular one here.

The input/output device 32 of the plan management apparatus 2 displays the final plan on a display device. The final plan may be stored in storage in the plan management apparatus 2 or in external storage.

Now an example of a method for determining the termination condition is described. When the plan evaluator 31 performs a constraint violation check by program operation, it may be determined that the termination condition is satisfied after repeating STEP 3 to STEP 10 a predetermined number of times. Moreover, STEP 3 to STEP 10 may be iterated until a predetermined time limit is reached, and when the time limit is reached, it may be determined that the termination condition is satisfied. Furthermore, a loop of STEP 3 to STEP 10 may be iterated until no constraint violation is found, or until the value of the objective function (sum of penalties) becomes equal to or less than a threshold value. It may be determined in other ways whether or not the termination condition is satisfied. When a user performs the constraint violation check using the input/output device 32 (GUI), the user may determine when to terminate repetition of STEP 3 to STEP 10 by himself/herself. The user may input instruction data for terminating the repetition, and terminate the repetition based on the instruction data.

As described above, according to this approach, the plan management apparatus or the user detects the constraint which the candidate plan generated by the plan generation apparatus 1 violates as the constraint violation information and feeds it back. The plan generation apparatus accumulates the constraint conditions based on the constraint violation information in the first constraint condition list. Specifically, if the first constraint condition list does not include the same constraint condition as the constraint condition, a weight is set for the constraint condition and it is added to the first constraint condition list. If the first constraint condition list includes the same constraint condition as the constraint condition, the weight of the same constraint condition included in the first constraint condition list is updated. By iterating generating a candidate plan, accumulating constraint conditions and changing weights of constraint conditions in this way, it is possible to realize a general-purpose plan system which can easily respond to change, addition and the like of constraints on site.

For example, when a system is first introduced or a work rule is changed, an evaluation algorithm or rules of the plan management apparatus 2 can be rewritten to reflect new or changed constraint conditions in a format which can be handled by the plan generation apparatus, thereby improving maintainability. In addition, feedback from users on each site makes it possible to adapt to subtle differences among constraints on each site in a stepwise manner.

(Hardware Configuration)

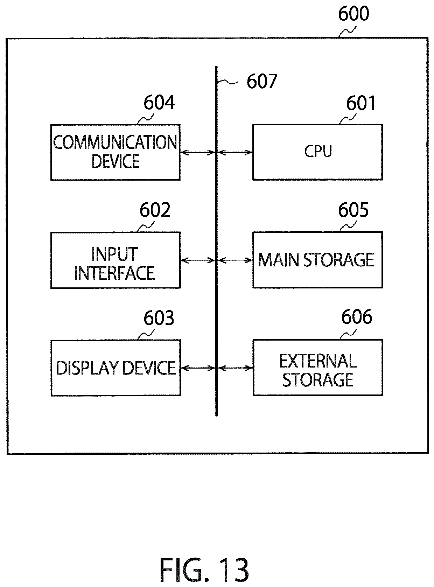

FIG. 13 illustrates a hardware configuration of the plan generation apparatus 1 and the plan management apparatus 2 according to the present approach. The plan generation apparatus 1 and the plan management apparatus 2 according to the present approach is constructed of a computer apparatus 600. The computer apparatus 600 is provided with a CPU 601, an input interface 602, a display device 603, a communication device 604, a main storage 605 and an external storage device 606, which are mutually connected by a bus 607.

The CPU (central processing unit) 601 executes a computer program for implementing the above-mentioned respective functional components of the plan generation apparatus 1 and the plan management apparatus 2 on the main storage 605. The CPU 601 executes the computer program and thereby implements the respective functional components.

The input interface 602 is a circuit for inputting operation signals from the input device such as a keyboard, mouse, and touch panel or the like into the plan generation apparatus 1 and the plan management apparatus 2. The input device 120 that carries out the input function can be constructed on the input interface 602.

The display device 603 displays data or information outputted from the plan generation apparatus 1 and the plan management apparatus 2. The display device 603 is, for example, an LCD (Liquid Crystal Display), a CRT (Cathode Ray Tube), and a PDP (plasma display), but the display device 603 is not limited thereto. The data or information outputted from computer apparatus 600 can be displayed by this display device 603. The output device 130 can be constructed on the display device 603.

The communication device 604 is a circuit for the plan generation apparatus 1 and the plan management apparatus 2 to communicate with the external device by wireless or wired means. Information can be inputted from the external device via the communication device 604. The information inputted from the external device can be stored in the DB. The input device 120 or the output device 130 that carries out the communication function can be constructed on the communication device 604.

The main storage 605 stores a program that implements processing of the present approach, data necessary to execute the program and data generated by executing the program. The program is developed and executed on the main storage 605. The main storage 605 may be, for example, RAM, DRAM or SRAM, but it is not limited to this. The various DBs and the storage in each approach may be constructed on the main storage 605.

The external storage device 606 stores the above-described program and data necessary to execute the program, data generated by executing the program or the like. The program and data are read into the main storage 605 during processing of the present approach. The external storage device 606 is, for example, a hard disk, an optical disk, a flash memory or a magnetic tape, but it is not limited to this. The various DBs and the storage in each approach may be constructed on the external storage device 606.

Note that the above-described program may be pre-installed in the computer apparatus 600 or may be stored in a storage medium such as a CD-ROM. The program may be uploaded on the Internet.

Note that the computer apparatus 600 may be provided with one or a plurality of processors 601, input interfaces 602, display devices 603, communication devices 604 and main storages 605, and peripheral devices such as a printer and a scanner may be connected thereto.

In addition, the plan generation apparatus 1 and the plan management apparatus 2 may be constructed of the single computer apparatus 600 or may be configured as a system composed of a plurality of mutually connected computer apparatuses 600.

While certain approaches have been described, these approaches have been presented by way of example only, and are not intended to limit the scope of the inventions. Indeed, the apparatuses described herein may be embodied in a variety of other forms; furthermore various omissions, substitutions and changes in the form of the apparatuses described herein may be made. The accompanying claims and their equivalents are intended to cover such forms or modifications as would fall within the scope of the inventions.

[Clauses]

Clause 1. An information processing apparatus comprising:

a plan generator to generate a first candidate plan for work performed by a plurality of workers based on constraint information including a first constraint condition for the work; and
an updater to acquire a second constraint condition for the work based on the first candidate plan and update the constraint information based on the second constraint condition.

Clause 2. The information processing apparatus according to clause 1, comprising:

a constraint condition acquirer to output a check request for checking whether or not the first candidate plan violates a constraint and acquire the second constraint condition for the constraint which the first candidate plan violates,
wherein the updater to updates the constraint information based on the second constraint condition acquired by the constraint condition acquirer.

Clause 3. The information processing apparatus according to clause 1 or 2, wherein
the updater adds the second constraint condition to the constraint information when the constraint information does not include a constraint condition identical to the second constraint condition.

Clause 4. The information processing apparatus according to any one of clauses 1 to 3, wherein

the constraint information includes a weight of the first constraint condition, and
the updater changes the weight of the first constraint condition identical to the second constraint condition when the constraint information includes the first constraint condition identical to the second constraint condition.

Clause 5. The information processing apparatus according to one of clauses 1 to 4, wherein
the second constraint condition prohibits a specific sequential order of two or more of the work for the worker.

Clause 6. The information processing apparatus according to one of clauses 1 to 5, wherein
the second constraint condition prohibits combination of a specific worker and a specific work.

Clause 7. The information processing apparatus according to one of clauses 1 to 6, wherein
the work includes at least one attribute, and
the second constraint condition prohibits combination of a specific worker and a specific attribute.

Clause 8. The information processing apparatus according to one of clauses 1 to 7, wherein
the work includes at least one attribute, and
the second constraint condition includes at least one of an upper limit value and a lower limit value for a sum of values of the attributes of the work assigned to the worker within a period of a first length.

Clause 9. The information processing apparatus according to clause 8, wherein
the first constraint condition and the second constraint condition include at least one of the upper limit value and the lower limit value for the sum of the values of the attributes of the work assigned to the worker within the period of the first length, and
the updater updates at least one of the upper limit value and the lower limit value in the first constraint condition included in the constraint information based on at least one of the upper limit value and the lower limit value in the second constraint condition.

Clause 10. The information processing apparatus according to one of clauses 1 to 9, wherein
the work includes at least one attribute and the second constraint condition prohibits a specific sequential order of attributes of a plurality of the works.

Clause 11. The information processing apparatus according to one of clauses 1 to 10, wherein
the plan generator generates the first candidate plan based on reservation data of the work previously assigned to the worker.

Clause 12. The information processing apparatus according to clause 2, wherein
the constraint condition acquirer outputs the check request to a user's operation device and acquires the second constraint condition from the operation device.

Clause 13. The information processing apparatus according to clause 2, wherein
the constraint condition acquirer outputs the check request to a device which checks whether the constraint violation is present and acquires the second constraint condition from the device.

Clause 14. An information processing apparatus comprising:
an updater to update constraint information including a first constraint condition for generating a work plan for work performed by a plurality of workers, by acquiring a second constraint condition for a constraint which a candidate for the work plan violates.

Clause 15. The information processing apparatus according to clause 14, comprising
the updater initializes a part or all of the updated constraint information.

Clause 16. An information processing apparatus comprising:

a plan generator to generate a first candidate plan for work performed by a plurality of workers based on constraint information including a first constraint condition for the work; and
an updater to acquire a second constraint condition for the work based on the first candidate plan and update the constraint information based on the second constraint condition.

Clause 17. An information processing apparatus comprising:

a plan generator to generate a first candidate plan for work performed by a plurality of workers based on constraint information including a first constraint condition for the work; and
an updater to acquire a second constraint condition for the work based on the first candidate plan and update the constraint information based on the second constraint condition.

**Claims**

1. An information processing apparatus comprising:

   a plan generator to generate a first candidate plan for work performed by a plurality of workers based on constraint information including a first constraint condition for the work; and
   an updater to acquire a second constraint condition for the work based on the first candidate plan and update the constraint information based on the second constraint condition.

2. The information processing apparatus according to claim 1, comprising:

   a constraint condition acquirer to output a check request for checking whether or not the first candidate plan violates a constraint and acquire the second constraint condition for the constraint which the first candidate plan violates,
   wherein the updater to updates the constraint information based on the second constraint condition acquired by the constraint condition acquirer.

3. The information processing apparatus according to claim 1 or 2, wherein
   the updater adds the second constraint condition to the constraint information when the constraint information does not include a constraint condition identical to the second constraint condition.

4. The information processing apparatus according to any one of claims 1 to 3, wherein
   the constraint information includes a weight of the first constraint condition, and
   the updater changes the weight of the first constraint condition identical to the second constraint condition when the constraint information includes the first constraint condition identical to the second constraint condition.

5. The information processing apparatus according to one of claims 1 to 4, wherein
   the second constraint condition prohibits a specific sequential order of two or more of the work for the worker.

6. The information processing apparatus according to one of claims 1 to 5, wherein
   the second constraint condition prohibits combination of a specific worker and a specific work.

7. The information processing apparatus according to one of claims 1 to 6, wherein
   the work includes at least one attribute, and
   the second constraint condition prohibits combination of a specific worker and a specific attribute.

8. The information processing apparatus according to one of claims 1 to 7, wherein
   the work includes at least one attribute, and
   the second constraint condition includes at least one of an upper limit value and a lower limit value for a sum of values of the attributes of the work assigned to the worker within a period of a first length.

9. The information processing apparatus according to claim 8, wherein
   the first constraint condition and the second constraint condition include at least one of the upper limit value and the lower limit value for the sum of the values of the attributes of the work assigned to the worker within the period of the first length, and
   the updater updates at least one of the upper limit value and the lower limit value in the first constraint condition included in the constraint information based on at least one of the upper limit value and the lower limit value in the second constraint condition.

10. The information processing apparatus according to one of claims 1 to 9, wherein

the work includes at least one attribute and the second constraint condition prohibits a specific sequential order of attributes of a plurality of the works.

11. The information processing apparatus according to one of claims 1 to 10, wherein
the plan generator generates the first candidate plan based on reservation data of the work previously assigned to the worker.

12. The information processing apparatus according to claim 2, wherein
the constraint condition acquirer outputs the check request to a user's operation device and acquires the second constraint condition from the operation device.

13. The information processing apparatus according to claim 2, wherein
the constraint condition acquirer outputs the check request to a device which checks whether the constraint violation is present and acquires the second constraint condition from the device.

14. An information processing apparatus comprising:
an updater to update constraint information including a first constraint condition for generating a work plan for work performed by a plurality of workers, by acquiring a second constraint condition for a constraint which a candidate for the work plan violates.

15. The information processing apparatus according to claim 14, comprising
the updater initializes a part or all of the updated constraint information.

16. An information processing apparatus comprising:

a plan generator to generate a first candidate plan for work performed by a plurality of workers based on constraint information including a first constraint condition for the work; and
an updater to acquire a second constraint condition for the work based on the first candidate plan and update the constraint information based on the second constraint condition.

17. An information processing apparatus comprising:

a plan generator to generate a first candidate plan for work performed by a plurality of workers based on constraint information including a first constraint condition for the work; and
an updater to acquire a second constraint condition for the work based on the first candidate plan and update the constraint information based on the second constraint condition.

FIG. 1

|              | 11/1     | 11/2     | 11/3     | 11/4            | · · · |
|--------------|----------|----------|----------|-----------------|-------|
| CREW MEMBER1 | ROUTE 1  | ROUTE 2  | HOLIDAY  | ANNUAL LEAVE    |       |
| CREW MEMBER2 | HOLIDAY  | ROUTE 1  | ROUTE 2  | HOLIDAY         |       |
| CREW MEMBER3 | -        | HOLIDAY  | ROUTE 1  | ROUTE 2         |       |
| CREW MEMBER4 | ROUTE 9  | -        | HOLIDAY  | ROUTE 3         |       |
| ⋮            |          |          |          |                 |       |

## FIG. 2

```
ROUTE {
     CONSIDER AS HOLIDAY? : NO
     WORK TYPE: MIDNIGHT
     WORKING HOURS :  8 H
     WORK START : 8:00
     WORK END : 17:00
     REST PERIOD : 11:30 − 12:15
     VEHICLE TYPE: LOCOMOTIVE
     SECTIONS WHICH VEHICLE GOES THROUGH :A SECTION、K SECTION ,   ,M SECTION
     ‥
}
```

## FIG. 3

|  | 2/1 | 2/2 | 2/3 | 2/4 | 2/5 | 2/6 | 2/7 | 2/8 |
|---|---|---|---|---|---|---|---|---|
| CREW MEMBER1 | ROUTE1 | ROUTE5 | ROUTE3 | PUBLIC HOLIDAY | ROUTE4 | ROUTE2 | ROUTE6 | ROUTE7 |
| CREW MEMBER2 | ROUTE7 | ROUTE1 | ROUTE2 | ROUTE3 | PUBLIC HOLIDAY | ROUTE4 | ROUTE5 | ROUTE6 |
| CREW MEMBER3 | ROUTE6 | ROUTE7 | ROUTE1 | ROUTE2 | ROUTE3 | PUBLIC HOLIDAY | ROUTE4 | ROUTE5 |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

## FIG. 4A

|  | 2/1 | 2/2 | 2/3 | 2/4 | 2/5 | 2/6 | 2/7 | 2/8 |
|---|---|---|---|---|---|---|---|---|
| CREW MEMBER1 | ROUTE1 | ROUTE5 | ROUTE3 | PUBLIC HOLIDAY | ROUTE4 | ROUTE2 | ROUTE6 | ROUTE7 |
| CREW MEMBER2 | ROUTE7 | ROUTE1 | ROUTE2 | ROUTE3 | PUBLIC HOLIDAY | ROUTE4 | ROUTE5 | ROUTE6 |
| CREW MEMBER3 | ROUTE6 | ROUTE7 | ROUTE1 | ROUTE2 | ROUTE3 | PUBLIC HOLIDAY | ROUTE4 | ROUTE5 |
| ⋮ | ⋮ | ⋮ | ⋮ | ⋮ | ⋮ | ⋮ | ⋮ | ⋮ |
| CREW MEMBER8 | ROUTE2 | ROUTE 4 | PUBLIC HOLIDAY | ROUTE6 | ROUTE5 | ROUTE3 | ROUTE7 | ROUTE1 |

## FIG. 4B

UPDATED FIRST CONSTRAINT CONDITION LIST

CONSTRAINT VIOLATION
INFORMATION (SECOND
CONSTRAINT CONDITION LIST)

FIRST CONSTRAINT
CONDITION LIST

ROUTE5→ROUTE3 : WEIGHT0.5＋0.1
ROUTE9→ROUTE5 : WEIGHT0.5
ROUTE 4 →PUBLIC HOLIDAY→ROUTE6 : WEIGHT0.5
⋮

◀

ROUTE 5 →ROUTE 3
ROUTE 4 →PUBLIC HOLIDAY→ROUTE6

＋

ROUTE5→ROUTE3 : WEIGHT0.5
ROUTE9→ROUTE5 : WEIGHT0.5
⋮

FIG. 5

EP 3 965 028 A1

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1 VEHICLE TYPE: ELECTRIC | ROUTE5 VEHICLE TYPE: ELECTRIC | ROUTE3 VEHICLE TYPE: ELECTRIC | PUBLIC HOLIDAY VEHICLE TYPE: DIESEL | ROUTE4 VEHICLE TYPE: ELECTRIC | ROUTE2 VEHICLE TYPE: ELECTRIC | ROUTE6 VEHICLE TYPE: DIESEL | ROUTE7 VEHICLE TYPE: ELECTRIC |
| CREW MEMBER2 | ROUTE7 VEHICLE TYPE: ELECTRIC | ROUTE1 VEHICLE TYPE: ELECTRIC | ROUTE2 VEHICLE TYPE: ELECTRIC | ROUTE3 VEHICLE TYPE: STEAM | PUBLIC HOLIDAY VEHICLE TYPE: ELECTRIC | ROUTE4 VEHICLE TYPE: ELECTRIC | ROUTE5 VEHICLE TYPE: DIESEL | ROUTE6 VEHICLE TYPE: ELECTRIC |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

FIG. 6A

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1 VEHICLE TYPE: ELECTRIC | ROUTE5 VEHICLE TYPE: ELECTRIC | ROUTE3 VEHICLE TYPE: ELECTRIC | PUBLIC HOLIDAY VEHICLE TYPE: DIESEL | ROUTE4 VEHICLE TYPE: ELECTRIC | ROUTE2 VEHICLE TYPE: ELECTRIC | ROUTE6 VEHICLE TYPE: DIESEL | ROUTE7 VEHICLE TYPE: ELECTRIC |
| CREW MEMBER2 | ROUTE7 VEHICLE TYPE: ELECTRIC | ROUTE1 VEHICLE TYPE: ELECTRIC | ROUTE2 VEHICLE TYPE: ELECTRIC | ROUTE3 VEHICLE TYPE: STEAM | PUBLIC HOLIDAY VEHICLE TYPE: ELECTRIC | ROUTE4 VEHICLE TYPE: ELECTRIC | ROUTE5 VEHICLE TYPE: DIESEL | ROUTE6 VEHICLE TYPE: ELECTRIC |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

FIG. 6B

FIRST CONSELECTRICT
CONDITION LIST

UPDATED FIRST CONSELECTRICT CONDITION LIST

```
CREW MEMBER 1 & STEAM : 0.5
CREW MEMBER 2 " & " DIESEL : 0.5
                    ⋮
```

```
CREW MEMBER 1 & STEAM : 0.5
CREW MEMBER 2 " & " DIESEL : 0.5+0.1
CREW MEMBER☒ " & " STEAM : 0.5
                    ⋮
```

+

```
CREW MEMBER2 & STEAM
CREW MEMBER 2 " & " DIESEL
```

CONSELECTRICT VIOLATION
INFORMATION (SECOND
CONSELECTRICT CONDITION LIST)

# FIG. 7

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1<br>WORKING: 8H | ROUTE5<br>WORKING:6H | ROUTE3<br>WORKING: 7H | PUBLIC HOLIDAY<br>WORKING: 0H | ROUTE4<br>WORKING: 8H | ROUTE2<br>WORKING: 9H | ROUTE6<br>WORKING: 7H | ROUTE7<br>WORKING: 8H |
| CREW MEMBER2 | ROUTE7<br>WORKING: 8H | ROUTE1<br>WORKING: 9H | ROUTE2<br>WORKING: 9H | ROUTE3<br>WORKING: 7H | PUBLIC HOLIDAY<br>WORKING: 0H | ROUTE14<br>WORKING: 10H | ROUTE5<br>WORKING: 6H | ROUTE6<br>WORKING: 7H |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

## FIG. 8A

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1<br>WORKING: 8H | ROUTE5<br>WORKING:6H | ROUTE3<br>WORKING: 7H | PUBLIC HOLIDAY<br>WORKING: 0H | ROUTE4<br>WORKING: 8H | ROUTE2<br>WORKING: 9H | ROUTE6<br>WORKING: 7H | ROUTE7<br>WORKING: 8H |
| CREW MEMBER2 | ROUTE7<br>WORKING: 8H | ROUTE1<br>WORKING: 9H | ROUTE2<br>WORKING: 9H | ROUTE3<br>WORKING: 7H | PUBLIC HOLIDAY<br>WORKING: 0H | ROUTE14<br>WORKING: 10H | ROUTE5<br>WORKING: 6H | ROUTE6<br>WORKING: 7H |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

## FIG.8B

EP 3 965 028 A1

FIRST CONSTRAINT
CONDITION LIST

UPDATED FIRST CONSTRAINT CONDITION LIST

$\sum_{d=1}^{8}$WORKING HOURS $d < 60$ : 0.5
$\sum_{d=1}^{8}$PUBLIC HOLIDAY $\geq 1$ : 0.5
⋮

+

$\sum_{d=1}^{8}$WORKING HOURS $d < 56$ : 0.5+**0.1**
$\sum_{d=1}^{8}$PUBLIC HOLIDAY $\geq 1$ : 0.5

⋮

$\sum_{d=1}^{8}$WORKING HOURS $d < 56$

CONSTRAINT VIOLATION
INFORMATION (SECOND
CONSTRAINT CONDITION LIST)

FIG. 9

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1 MIDNIGHT | ROUTE5 EARLY MORNING | ROUTE3 DAY SHIFT | PUBLIC HOLIDAY HOLIDAY | ROUTE4 DAY SHIFT | ROUTE2 DAY SHIFT | ROUTE6 DAY SHIFT | ROUTE7 MIDNIGHT |
| CREW MEMBER2 | ROUTE7 MIDNIGHT | ROUTE1 MIDNIGHT | ROUTE2 DAY SHIFT | ROUTE3 DAY SHIFT | PUBLIC HOLIDAY HOLIDAY | ROUTE14 MIDNIGHT | ROUTE5 EARLY MORNING | ROUTE6 DAY SHIFT |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

## FIG. 10A

| | 2/1 | 2/2 | 2/3 | 2/4 | 2/5 | 2/6 | 2/7 | 2/8 |
|---|---|---|---|---|---|---|---|---|
| CREW MEMBER1 | ROUTE1 MIDNIGHT | ROUTE5 EARLY MORNING | ROUTE3 DAY SHIFT | PUBLIC HOLIDAY HOLIDAY | ROUTE4 DAY SHIFT | ROUTE2 DAY SHIFT | ROUTE6 DAY SHIFT | ROUTE7 MIDNIGHT |
| CREW MEMBER2 | ROUTE7 MIDNIGHT | ROUTE1 MIDNIGHT | ROUTE2 DAY SHIFT | ROUTE3 DAY SHIFT | PUBLIC HOLIDAY HOLIDAY | ROUTE14 MIDNIGHT | ROUTE5 EARLY MORNING | ROUTE6 DAY SHIFT |
| ⋮ | ⋮ | ⋮ | ⋮ | ⋮ | ⋮ | ⋮ | ⋮ | ⋮ |
| CREW MEMBER8 | ROUTE2 | ROUTE3 | PUBLIC HOLIDAY | ROUTE4 | ROUTE5 | ROUTE6 | ROUTE7 | ROUTE1 |

## FIG. 10B

FIRST CONSTRAINT
CONDITION LIST

UPDATED FIRST CONSTRAINT CONDITION LIST

MIDNIGHT→MIDNIGHT : WEIGHT0.5

+

MIDNIGHT→MIDNIGHT : WEIGHT0.5+0.1
MIDNIGHT→EARLY MORNING : WEIGHT0.5

⬅

MIDNIGHT→MIDNIGHT
MIDNIGHT→EARLY MORNING

CONSTRAINT VIOLATION
INFORMATION (SECOND
CONSTRAINT CONDITION LIST)

FIG. 11

EP 3 965 028 A1

```
                              ┌─────────────┐
                              │    START    │
                              └──────┬──────┘
                                     ▼
        ┌────────────────────────────────────────────────────┐
        │              INITIAL DATA IS INPUT                  ├─ STEP1
        └────────────────────────┬───────────────────────────┘
                                 ▼
        ┌────────────────────────────────────────────────────┐
        │       FIRST CONSTRAINT CONDITION LIST IS INPUT      ├─ STEP2
        └────────────────────────┬───────────────────────────┘
                                 ▼
        ┌────────────────────────────────────────────────────┐
        │             CANDIDATE PLAN IS CREATED               ├─ STEP3
        └────────────────────────┬───────────────────────────┘
                                 ▼
        ┌────────────────────────────────────────────────────┐
        │       CONSTRAINT VIOLATION CHECK OF CANDIDATE PLAN  ├─ STEP4
        └────────────────────────┬───────────────────────────┘
                                 ▼
        ┌────────────────────────────────────────────────────┐
        │   CONSTRAINT VIOLATION INFORMATION IS CONVERTED     ├─ STEP5
        │      INTO SECOND CONSTRAINT CONDITION LIST          │
        └────────────────────────┬───────────────────────────┘
                                 ▼
        ┌────────────────────────────────────────────────────┐
        │    CONSTRAINTS IN SECOND CONSTRAINT CONDITION LIST ARE │─ STEP6
        │ SEQUENTIALLY COMPARED WITH FIRST CONSTRAINT CONDITION LIST│
        └────────────────────────┬───────────────────────────┘
```

NEW CONSTRAINT? — STEP7

NO          YES

STEP8                                              STEP9

WEIGHT AND BOUNDARY VALUE OF THE SAME CONSTRAINT CONDITION IN FIRST CONSTRAINT CONDITION LIST IS CHANGED

NEW CONSTRAINT CONDITION WITH INITIAL WEIGHT IS ADDED TO FIRST CONSTRAINT CONDITION LIST

ARE ALL OF CONSTRAINT CONDITIONS IN SECOND CONSTRAINT CONDITION LIST CHECKED? — STEP10

NO          YES

IS TERMINATION CONDITION SATISFIED? — STEP11

NO          YES

CONTENTS OF FIRST CONSTRAINT CONDITION LIST ARE REFLECTED IN CONSTRAINT CONDITION STORAGE 15 AND LAST PLAN IS OUTPUT — STEP12

```
                              ┌─────────────┐
                              │     END     │
                              └─────────────┘
```

FIG. 12

600

607

604
COMMUNICATION
DEVICE

601
CPU

602
INPUT
INTERFACE

605
MAIN STORAGE

603
DISPLAY DEVICE

606
EXTERNAL
STORAGE

FIG. 13

Europäisches
Patentamt

European
Patent Office

Office européen
des brevets

# EUROPEAN SEARCH REPORT

Application Number

EP 21 16 0379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/203531 A1 (HITACHI LTD [JP]) 22 December 2016 (2016-12-22) * paragraphs [0012] - [0018]; figure 3 * ----- | 1-17 | INV. G06Q10/04 G06Q10/06 G06Q10/10 |

TECHNICAL FIELDS
SEARCHED       (IPC)

G06Q

The present search report has been drawn up for all claims

| Place of search | Date of completion of the search | Examiner |
|---|---|---|
| Munich | 17 August 2021 | Giemsa, Falk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 16 0379

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2021

| Patent document cited in search report | Publication date | Patent family member(s) | Publication date |
|---|---|---|---|
| WO 2016203531 A1 | 22-12-2016 | JP 6440840 B2 | 19-12-2018 |
| | | JP WO2016203531 A1 | 31-08-2017 |
| | | WO 2016203531 A1 | 22-12-2016 |

EPO FORM P0459

For more details about this annex : see Official Journal of the European Patent Office, No. 12/82